Europäisches Patentamt

European Patent Office

Office européen des brevets

(11) Veröffentlichungsnummer: **0 174 640**
**B1**

(12) # EUROPÄISCHE PATENTSCHRIFT

(45) Veröffentlichungstag der Patentschrift:
**20.04.88**

(51) Int. Cl.⁴: **B 27 B 5/04,** B 23 D 59/00

(21) Anmeldenummer: **85111440.5**

(22) Anmeldetag: **10.09.85**

(54) **Besäumvorrichtung für eine Tischkreissäge.**

(30) Priorität: **14.09.84 DE 3433796**

(43) Veröffentlichungstag der Anmeldung:
**19.03.86 Patentblatt 86/12**

(45) Bekanntmachung des Hinweises auf die Patenterteilung:
**20.04.88 Patentblatt 88/16**

(84) Benannte Vertragsstaaten:
**AT BE CH DE FR GB IT LI SE**

(56) Entgegenhaltungen:
**US - A - 3 138 179**
**US - A - 4 179 961**
**US - A - 4 406 200**

(73) Patentinhaber: **Josef Scheppach Maschinenfabrik GmbH & Co., Günzburger Strasse 69, D-8873 Ichenhausen (DE)**

(72) Erfinder: **Scheppach, Fritz, Dr.-Beer-Strasse 5, D-8873 Ichenhausen (DE)**

(74) Vertreter: **Munk, Ludwig, Dipl.-Ing., Patentanwalt Prinzregentenstrasse 1, D-8900 Augsburg (DE)**

## Beschreibung

Die Erfindung betrifft eine Besäumvorrichtung für eine Tischkreissäge mit einer in Arbeitsrichtung verschiebbaren, tischseitig geführten Werkstückaufnahme.

Die bekannten Anordnungen dieser Art bestehen normalerweise aus einem mit einem vorderen Werkstückanschlag versehenen Schlitten, der mit einer in eine Führungsnut des Kreissägentisches eingreifenden Führungsleiste versehen ist. Eine Anordnung dieser Art ist jedoch wegen der im Bereich des Kreissägentisches benötigten Nut nur bei Maschinen mit gegossenem Tisch brauchbar. Viele Kreissägen, insbesondere Baukreissägen und dergleichen, besitzen jedoch einen als Blechformling ausgebildeten Tisch, der nicht mit einer Führungsnut versehen werden kann. Ganz abgesehen davon eignet sich die bekannte Anordnung vorstehend umrissener Art auch nicht zur Bearbeitung längerer Werkstücke, da hierbei ein Klemmen der Führungsleiste in der Führungsnut zu befürchten wäre. Ein weiterer Nachteil dieser bekannten Anordnung ist darin zu sehen, dass hier das Werkstück nur mit seinem vorderen Ende an einem zugeordneten Werkstückanschlag anliegt und daher im Bereich seines hinteren Endes von Hand in Stellung gehalten werden muss, was sich nicht nur ungünstig auf die erzielbare Schnittgenauigkeit, Unfallsicherheit und Bedienungsfreundlichkeit auswirkt, sondern auch eine volle Auflage des Werkstücks auf dem Schlitten erfordert und daher ebenfalls die maximale Werkstücklänge beschränkt.

Es sind auch bereits Sonderkreissägen mit im Bereich einer Tischseitenkante angeordneten Sägenblatt und mit einem im Bereich dieser Tischseitenkante gelagerten, einen Werkstückanschlag aufweisenden Schlitten zur Aufnahme des zu besäumenden Werkstücks bekannt. Da sich hier das Sägenblatt im Bereich einer Tischseitenkante befindet, sind Maschinen dieser Art nur als Besäummaschinen verwendbar und für andere Einsatzzwecke ungeeignet. Bei Verwendung eines normalen Kreissägentisches mit etwa im Bereich der Tischmitte angeordnetem Sägenblatt ergäbe sich jedoch ein zu grosser Abstand zwischen dem Sägenblatt und dem das Werkstück aufnehmenden, mit einem vorderen Werkstückanschlag versehenen Schlitten, so dass nur sehr breite Werkstücke bearbeitbar wären. Da auch bei dieser Ausführung das Werkstück lediglich im Bereich seiner Vorderkante an einem zugeordneten Werkstückanschlag anliegt, treffen die diesbezüglich weiter oben bereits geschilderten Nachteile auch auf die vorliegende Ausführung zu.

Hiervor ausgehend ist es daher die Aufgabe der vorliegenden Erfindung, unter Vermeidung der Nachteile der bekannten Anordnungen eine Besäumeinrichtung eingangs erwähnter Art zu schaffen, die unabhängig von der Ausbildung des Kreissägentisches und der Anordnung des Kreissägenblatts an jeden normalen Kreissägentisch lösbar anbaubar ist und die gleichzeitig auch bei der Bearbeitung vergleichsweise langer und/oder schmaler Werkstücke eine hohe Sicherheit, Bedienungsfreundlichkeit und Arbeitsgenauigkeit gewährleistet.

Die Lösung dieser Aufgabe kennzeichnet sich erfindungsgemäss durch einen als Anbauteil an einer Tischlängsseite lösbar festlegbaren Anbauträger, auf dem eine hierüber auskragende Laufschiene gelagert ist, die zwei einander gegenüberliegende Werkstückspanner trägt, wobei die Werkstückspanner mit an tischseitig auskragenden, auf Tischhöhe angeordneten Armen versehen sind, an denen Werkstückaufnehmer befestigt sind, und wobei der hintere Werkstückspanner in Längsrichtung auf der Laufschiene verschiebbar angeordnet ist.

Diese Massnahmen ergeben in vorteilhafter Weise eine Besäumeinrichtung, die keine tischseitig vorgesehene Führungsnut benötigt. Vielmehr ist die Anbauschiene auch an einen als Blechformling ausgebildeten Kreissägentisch etwa in derselben Weise anbaubar, wie die Längsführung eines Querschneidschlittens. Ein weiterer Vorteil der erfindungsgemässen Massnahmen ist darin zu sehen, dass die erfindungsgemässe Besäumvorrichtung als Zusatzgerät wahlweise zu anderen Zusatzgeräten anbringbar und abnehmbar ist, was das Einsatzfeld der Tischkreissäge selbst nicht unwesentlich verbreitern kann. Trotz der seitlichen Anbringung der erfindungsgemässen Besäumvorrichtung sind hiermit jedoch auch auf einer Normalkreissäge mit etwa im Bereich der Tischmitte angeordnetem Sägenblatt Werkstücke in jeder Breite besäumbar, da das Werkstück hier infolge der Ausstattung der Laufschiene mit auf seitlich auskragenden Armen angeordneten Werkstückaufnehmern auf dem normalen Kreissägentisch aufliegen kann. Die Verwendung von zwei einander gegenüberliegenden Werkstückspannern gewährleistet eine zuverlässige Aufnahme des zu besäumenden Werkstücks im Bereich seiner beiden Enden, was sich positiv auf die erzielbare Sicherheit und Arbeitsgenauigkeit auswirkt. Infolge der Verschiebbarkeit des hinteren Werkstückspanners lässt sich dabei in vorteilhafter Weise eine stufenlose Anpassung an jede gewünschte Werkstücklänge erreichen.

Hieraus ist erkennbar, dass die Erfindung die ihr gestellte Aufgabe mit einfachen und kostengünstigen Mitteln löst. Die mit der Erfindung erzielbaren Vorteile sind demnach insbesondere in einer ausgezeichneten Wirtschaftlichkeit zu sehen.

Gemäss einer vorteilhaften Weiterbildung der übergeordneten Massnahmen kann eine am Anbauträger befestigte, vom Bereich der hinteren Tischstirnseite entgegen der Bearbeitungsrichtung nach hinten sich erstreckende, auf Tischhöhe angeordnete Werkstückauflagebank vorgesehen sein. Diese Massnahme erleichtert die Bearbeitung besonders langer Werkstücke, die auf der Auflagebank kippsicher aufgenommen werden.

In weiterer Fortbildung der übergeordneten Massnahmen kann die Werkstückauflagebank mit einer auf einem seitlich auskragenden Arm aufgenommenen Stützrolle versehen sein, die die Laufschiene untergreift. Hierdurch lässt sich in vorteilhafter Weise eine Stabilisierung der Laufschiene in ihrem zurückgefahrenen Zustand erreichen.

Eine weitere vorteilhafte Ausgestaltung der übergeordneten Massnahmen kann darin bestehen, dass die Laufschiene in ihrer zurückgefahrenen Ausgangsstellung gegenüber dem sie aufnehmenden, stationären Anbauträger mittels einer Verriegelungseinrichtung selbsttätig arretierbar ist, die mittels eines zum hinteren Ende der Werkstückauflagebank sich erstreckenden, vorzugsweise als Zugleine ausgebildeten Zugorgans auslösbar ist. Diese Massnahme verhindert ein unbeabsichtigtes Herausfahren der Laufschiene aus ihrer Führung und erleichtert die Aufnahme eines Werkstücks auf den einander gegenüberliegenden Werkstückaufnehmern.

Vorteilhaft kann der Anbauträger einen nach oben offenen, U-förmigen Querschnitt aufweisen und mit zwei im Bereich der Innenseiten seiner seitlichen Schenkel angeordneten Laufrollenpaaren versehen sein. Zweckmässig ist dabei die in den Anbauträger eingreifende Laufschiene mit seitlichen, den Laufrollen zugeordneten Führungskanälen versehen, in die jeweils zwei hintereinander angeordnete Laufrollen eingreifen. Diese Massnahmen ergeben eine leicht gängige Lagerung und zuverlässige Führung der Laufschiene und gewährleisten eine einfache Abnehmbarkeit der Laufschiene vom Anbauträger, was den An- bzw. Abbauvorgang erleichtern kann.

Gemäss einer weiteren Ausgestaltung der übergeordneten Massnahmen kann die Laufschiene im Bereich ihrer nach oben weisenden Seite eine in Maschinenlängsrichtung verlaufende, hinterschnittene Nut aufweisen, in die den Werkstückspannern jeweils zugeordnete Leisten formschlüssig eingreifen. Diese Massnahme ermöglicht eine einfache Führung bzw. Fixierbarkeit der Werkstückspanner.

In weiterer Fortbildung der übergeordneten Massnahmen können die spannerseitig vorgesehenen Werkstückaufnehmer als zwei einander gegenüberliegende Stahlspitzen ausgebildet sein. Diese Massnahme ermöglicht in vorteilhafter Weise eine zuverlässige und genaue Werkstückaufnahme und zwar vollständig unabhängig von der Beschaffenheit und vom Verlauf der Werkstückstirnseiten. Es ist daher in vorteilhafter Weise auch möglich, Werkstücke mit schräg bzw. unregelmässig verlaufenden Werkstückstirnseiten zuverlässig aufzunehmen bzw. Werkstücke auch schräg einzuspannen.

Eine weitere vorteilhafte Massnahme kann darin bestehen, dass die seitlich auskragenden Arme der Werkstückspanner aus einem Rohrprofil bestehen das mit einem sägenblattseitig überstehenden Holz- oder Kunststoffeinsatz versehen ist. Diese Einsätze werden mittels des Kreissägenblatts abgelängt und stellen anschliessend eine zuverlässige Schnittmarkierung dar.

In einer weiteren zweckmässigen Ausgestaltung der übergeordneten Massnahmen kann der Anbauträger mit zwei im Bereich seiner Enden angeordneten, tischseitig auskragenden, an tischseitig festlegbaren Anbauplatten zur Anlage bringbaren Befestigungslaschen versehen sein, die im Bereich ihrer nach unten weisenden Kanten jeweils eine Rastkerbe und im Bereich ihres äusseren Endes jeweils einen tischseitig offenen Einfahrschlitz aufweisen, wobei die im Bereich der vorderen und hinteren Tischstirnseiten festlegbaren Anbauplatten mit der Rastkerbe bzw. dem Einfahrschlitz der jeweils zugeordneten Befestigungslasche zugeordneten Bolzen versehen sind. Diese Massnahmen ergeben praktisch einen Schnellverschluss und erleichtern somit den An- und Abbauvorgang. Infolge der vorgesehenen Rastkerben und Einfahrschlitze ergibt sich dabei in vorteilhafter Weise eine eindeutige Lagefixierung und Kippsicherung.

Weitere zweckmässige Ausgestaltungen und vorteilhafte Weiterbildungen der übergeordneten Massnahmen ergeben sich aus der nachstehenden Beschreibung eines Ausführungsbeispiels anhand der Zeichnung in Verbindung mit den restlichen Unteransprüchen.

In der Zeichnung zeigen:

Figur 1 eine Seitenansicht einer Baukreissäge mit einer seitlich angebauten Besäumvorrichtung,

Figur 2 eine Draufsicht auf die Anordnung gemäss Figur 1,

Figur 3 einen im Bereich der hinteren Tischstirnseite verlaufenden Querschnitt durch die Besäumvorrichtung und

Figur 4 ein Beispiel für die der Laufschiene zugeordnete Verriegelungseinrichtung teilweise im Schnitt.

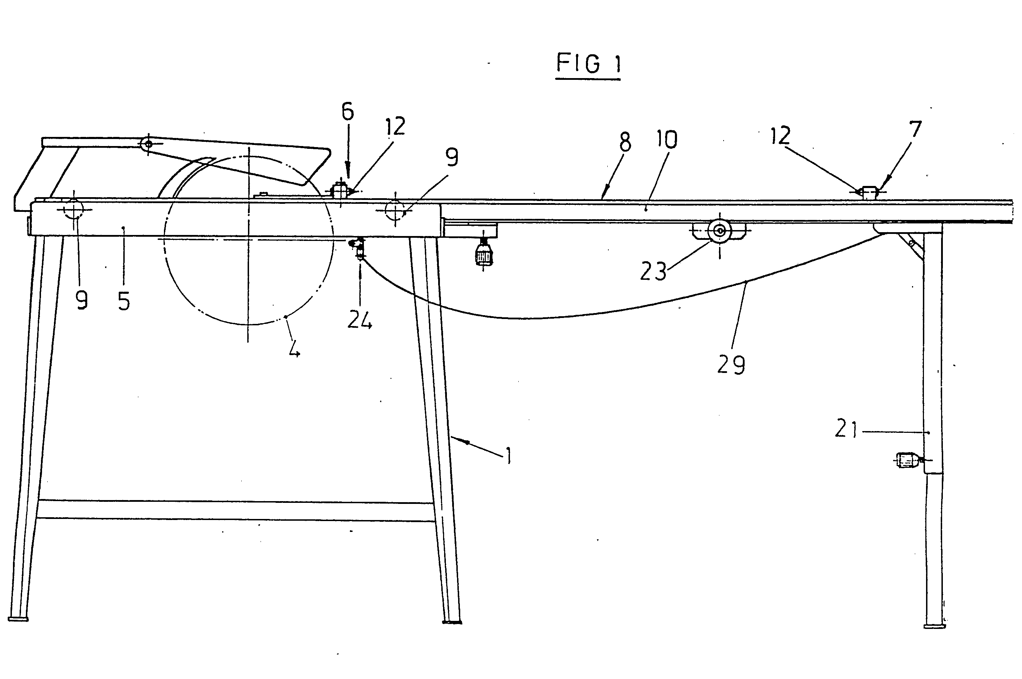

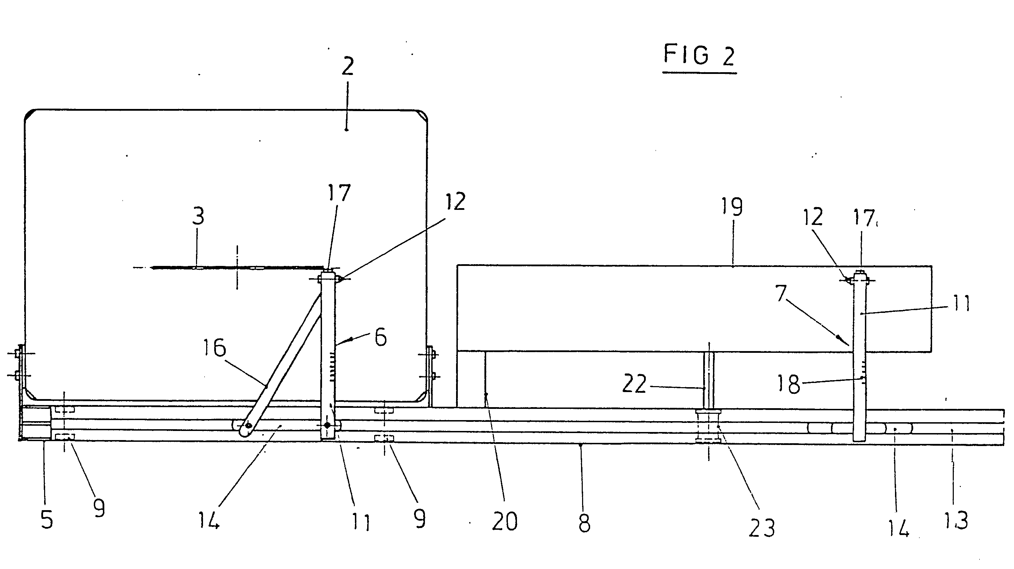

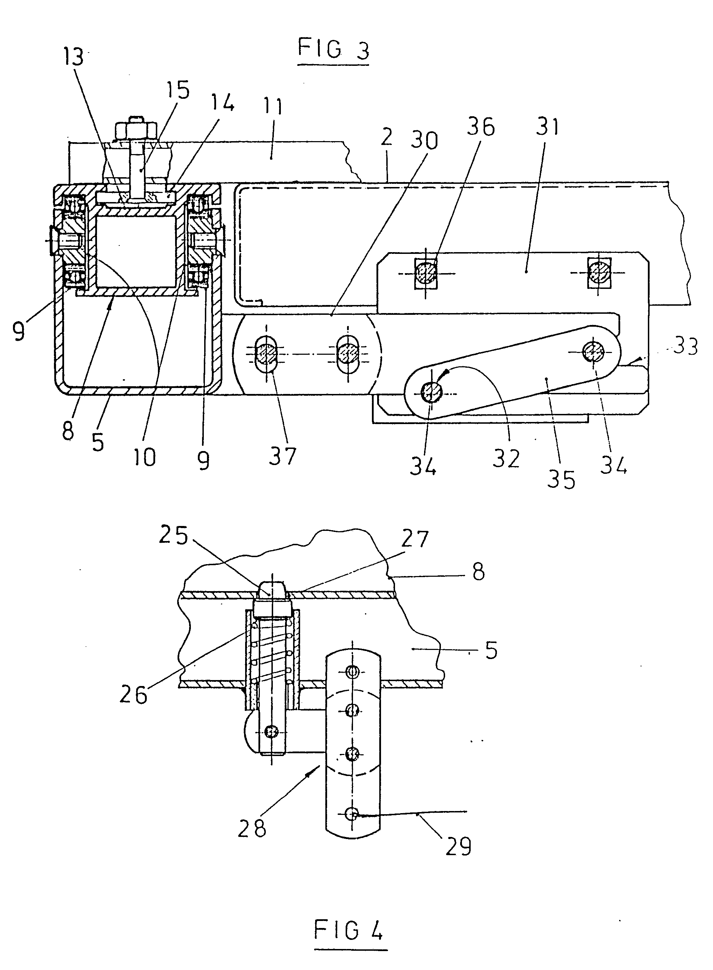

Der grundsätzliche Aufbau und die Wirkungsweise einer Tischkreissäge sind an sich bekannt. Die der Zeichnung zugrundeliegende Tischkreissäge in Form einer Baukreissäge besteht, wie am besten aus Figuren 1 und 2 erkennbar ist, aus einer auf einem Stützgestell 1 aufgenommenen Tischplatte 2, die in ihrem mittleren Bereich mit einem Schlitz 3 versehen ist, durch den das Sägenblatt 4 hindurchgreift. Die Tischplatte 2 ist, wie Figur 3 erkennen lässt, als mit einem abgekanteten Rand versehener Blechformling ausgebildet. An die Tischplatte 2 sind verschiedene Hilfsvorrichtungen anbaubar. Im vorliegenden Fall handelt es sich hierbei um eine Besäumvorrichtung zum seitlichen Besäumen von Brettern und dergleichen.

Die dargestellte Besäumvorrichtung besteht aus einem im Bereich der von der Bedienungsseite der Tischplatte 2 aus gesehen linken Tischseitenkante angeordneten, im Querschnitt U-förmigen Anbauträger 5, dessen Länge in etwa der Länge der Tischplatte 2 entspricht. Auf dem Anbauträger 5 ist eine wesentlich längere, mit einander gegenüberliegenden Werkstückspannern 6 bzw. 7 versehene Laufschiene 8 in Arbeitsrichtung verschiebbar gelagert. Hierzu ist der Anbauträger 5 mit vier im Bereich der Innenseiten seiner seitlichen Schenkel paarweise angeordneten Laufrollen 9 versehen. Die einen etwa kastenförmigen Querschnitt aufweisende Laufschiene 8 ist, wie am besten aus Figur 3 erkennbar ist, mit seitlichen Führungskanälen 10 versehen, in die jeweils zwei hintereinander angeordnete Laufrollen 9 eingreifen. Die Laufschiene 8 ist dabei so angeordnet, dass ihre obere Auflagefläche mit der Auflagefläche der Tischplatte 2 fluchtet. Die Breite der Laufschiene 8 im Bereich ihrer oberen Auflagefläche entspricht etwa der Breite der Anbauschiene 5. Die Randkanten der oberen Wandung der Laufschiene 8 sind nach unten abgewinkelt, so dass sich eine Hinterschneidung des oberen Bereichs der Führungskanäle 10 ergibt, was sich positiv auf die Funktionssicherheit auswirkt. Gleichzeitig ergibt sich hierdurch auch ein Schutz der kanalseitigen Laufflächen vor Verunreinigung. Die Laufrollen 9 sind so angeordnet, dass sie die Oberkante des Anbauträgers 5 um das Überschneidungsmass zuzüglich eines geringen Laufspiels überragen.

Die Werkstückspanner 6 bzw. 7 bestehen jeweils aus einem auf der Laufschiene 8 aufgenommenen, tischseitig auskragenden Arm 11 und einem im Bereich des tischseitigen Endes des jeweils zugeordneten Arms 11 hieran befestigten Werkstückaufnehmer 12. Die Arme 11 liegen mit ihrer Unterseite auf der Laufschiene 8 auf und befinden sich somit ebenfalls auf Tischhöhe. Der vordere Werkstückspanner 6 ist auf der Laufschiene 8 stationär angeordnet. Der hintere Werkstückspanner 7 ist auf der Laufschiene 8 in Arbeitsrichtung verschiebbar aufgenommen. Zur Fixierung bzw. Führung der Spanner 6 bzw. 7 ist die Laufschiene 8, wie am besten aus Figur 3 erkennbar ist, mit einer nach oben offenen, seitlich hinterschnittenen Nut 13 versehen, in die eine zugeordnete Leiste 14 jedes Werkstückspanners 6 bzw. 7 eingreift. Die spannerseitigen Arme 11 sind an der jeweils zugeordneten Leiste 14 festgelegt. Die Leiste 14 des hinteren, verschiebbaren Werkstückspanners 7 ist als schlittenartig in der Nut 13 geführte Führungsleiste ausgebildet. Die Leiste 14 des vorderen, stationären Werkstückspanners 6 ist als Klemmleiste ausgebildet, die zur Fixierung des vorderen Werkstückspanners 6 mittels einer Klemmschraube 15 mit dem zugeordneten, die Nut 13 überbrückenden Arm 11 verspannt werden kann. Zur Sicherung gegen Verdrehen ist dieser Arm 11, wie Figur 2 zeigt, mit einer schräg ausgestellten Versteifungsstrebe 16 versehen, die ebenfalls mittels einer Klemmschraube mit der als Klemmleiste ausgebildeten Leiste 14 verspannt werden kann. Der Arm 11 des hinteren Werkstückspanners 7 ist mit der zugeordneten Leiste 14 etwa durch eine Schweissverbindung verdrehsicher verbunden.

Die Werkstückaufnehmer 12 sind als einander gegenüberliegende Stahlspitzen ausgebildet, zwischen denen ein seitlich zu besäumendes Brett mit seinen Stirnseiten aufgenommen werden kann. Dies erfolgt so, dass das Brett zunächst mit der Stirnseite seines vorderen, auf der Tischplatte 2 aufliegenden Endes in die den vorderen Werkstückaufnehmer 12 bildende Stahlspitze eingestossen wird und dass dann die den hinteren Werkstückaufnehmer 12 bildende Stahlspitze durch Verschieben des hinteren Werkstückspanners 7 in die hintere Brettstirnseite, eingerammt wird. Zur Erleichterung einer genauen Aufnahme können die Arme 11 der Werkstückspanner 6 bzw. 7 mit einer Schnittmarkierung versehen sein. Im dargestellten Ausführungsbeispiel sind die Arme 11 hierzu als Rorprofile ausgebildet und mit einem aus Holz oder Kunststoff bestehenden sägenblattseitig überstehenden Einsatz 17 versehen, der mittels des Sägenblatts 4 abgeschnitten wird und dessen vordere Stirnseite somit eine exakte Schnittmarkierung darstellt. Es wäre auch denkbar, die Arme 11 als Träger einer jeweils zugeordneten, auf das Sägenblatt 3 ausgerichteten Skala 18 auszubilden. Nachdem das zu besäumende Werkstück auf den die Werkstückaufnehmer 12 bildenden Stahlspitzen aufgenommen ist, wird die Laufschiene 8 durch Ausübung einer Vorschubkraft auf den Arm 11 des hinteren Werkstückspanners 7 vorwärtsbewegt, wobei das zwischen den Werkstückspannern 6 bzw. 7 eingespannte Werkstück zum Eingriff mit dem Sägenblatt 4 gebracht wird. Eine Fixierung des hinteren Werkstückspanners 7 gegenüber der Laufschiene 8 kann erfolgen, ist jedoch infolge der hier eingeleiteten Vorschubkraft in der Regel nicht erforderlich.

Zur Erleichterung der Handhabung längerer Werkstücke ist, wie Figur 2 zeigt, eine in Verlängerung der anbauseitigen Tischhälfte nach rückwärts sich erstreckende, vom hinteren Werkstückspanner 7 in der zurückgefahrenen Ausgangsstellung übergriffene Werkstückauflagebank 19 vorgesehen, deren vorderes Ende durch einen seitlich auskragenden Träger 20 am Anbauträger 5 befestigt ist und deren hinteres Ende, wie Figur 1 zeigt, mittels eines in der Höhe verstellbaren, vorzugsweise umlegbaren Fusses 21 abgestützt ist. Die Werkstückauflagebank 19 ist etwa im Bereich ihrer Mitte mit einem laufschienenseitig auskragenden Arm 22 versehen, auf dem eine die Laufschiene 8 untergreifende Rolle 23 gelagert ist, die Schwingungen der in ihre Ausgangsstellung zurückgefahrenen Laufschiene 8 verhindert.

Bei der Durchführung des Einspannvorgangs befindet sich die Laufschiene 8 in ihrer zurückgefahrenen, den Figuren 1 und 2 zugrundeliegenden Ausgangsstellung. Um ein unbeabsichtigtes Herausfahren der Laufschiene 8 aus ihrer Führung zu verhindern und das Einstossen der die Werkstückaufnehmer 12 bildenden Stahlspitzen in die Werkstückstirnseiten zu erleichtern, ist die Laufschiene 8 in ihrer hinteren Ausgangsstellung mittels einer selbsttätig einrastenden Verriegelungseinrichtung 24 gegenüber dem stationären Anbauträger 5 arretierbar. Die im Bereich des Anbauträgers 5 vorgesehene Arretiereinrichtung 24 besteht, wie am besten aus Figur 4 erkennbar ist, aus einem anbauträgerseitig gelagerten, die Laufschiene 8 untergreifenden Sperrbolzen 25, der unter der Wirkung einer Rastfeder 26 in eine zugeordnete Bohrung 27 der unteren Wandung der Laufschiene 8 einrastet. Zur Auslösung des in die Bohrung 27 eingerasteten Sperrbolzens 25 ist eine mit einem Arm hieran angreifende, dreiarmige Wippe 28 vorgesehen, die mit einem weiteren Arm am Anbauträger 5 schwenkbar aufgehängt ist und deren dritter Arm mit einer Zugleine 29 verbunden ist, die zum hinteren Ende der Werkstückauflagebank 19 führt, so dass auf der gesamten Länge der Laufschiene 8 eine Fernbedienung vom Bereich des hinteren Werkstückspanners 7 aus möglich ist.

Zur Bewerkstelligung einer einfachen An- und Abbaumöglichkeit ist der Anbauträger 5, wie wiederum Figur 3 am besten zeigt, mit zwei im Bereich seiner Enden angeordneten, tischseitig auskragenden Befestigungslaschen 30 versehen. An der Tischplatte 2 sind den Befestigungslaschen 30 zugeordnete Anbauplatten 31 befestigt, deren äusserer Abstand dem lichten Abstand der Befestigungslaschen 30 entspricht, so dass diese hieran zur Anlage kommen, wodurch sich bereits eine Fixierung des Anbauträgers 5 in Längsrichtung ergibt. Die Befestigungslaschen 30 sind im Bereich ihrer nach unten weisenden Kanten mit jeweils mindestens einer nach unten offenen Rastkerbe 32 und im Bereich ihrer vom Anbauträger 5 abgewandten Enden mit jeweils einem tischseitig offenen Einfahrschlitz 33 versehen. Die Anbauplatten 31 sind mit der Rastkerbe 32 bzw. dem Einfahrschlitz 33 der jeweils zugeordneten Befestigungslasche 30 zugeordneten, querschnittsmässig hieran angepassten Bolzen 34 versehen. Bei der Durchführung des Anbauvorgangs werden die Befestigungslaschen 30 zunächst in einer leichen Kippstellung mit ihren hinteren Einfahröffnungen 33 auf die diesen zugeordneten Bolzen 34 aufgefahren und anschliessend durch leichtes Absenken mit ihrer Rastkerbe 32 an dem dieser jeweils zugeordneten Bolzen 32 eingehängt, wodurch eine eindeutige Lagefixierung und Kippsicherung erreicht wird. Zur Sicherung gegen unbeabsichtigtes Abheben können die Bolzen 34 mit einem Gewinde zur Aufnahme von Spannmuttern versehen sein, die zweckmässig von einer mit Löchern für beide Bolzen versehenen Unterlegleiste 35 untergriffen werden.

Die Anbauplatten 31 sind zur Gewährleistung einer Höhenregulierung mit lotrecht zur Tischfläche verlaufenden Langlöchers 36 versehen, durch die tischseitig fixierte Klemmschrauben hindurchgreifen. Im dargestellten Ausführungsbeispiel sind die Befestigungslaschen 30 zur Gewährleistung einer weiteren Höhenregulierung zweiteilig ausgebildet, wobei im Bereich der Stossstelle ebenfalls von Klemmschrauben durchsetzte, lotrecht zur Tischfläche verlaufende Langlöcher 37 vorgesehen sind. Dies erweist sich vor allem da als vorteilhaft, wo die Anbauplatten 31 mehreren, wahlweise in Stellung bringbaren Anbauaggregaten, also nicht nur der Besäumvorrichtung, sondern etwa auch einer seitlichen Längsführung für einen Ablängschlitten etc., zugeordnet sind. In Fällen dieser Art ist es möglich, die Anbauplatten 31 auf eines dieser Aggregate einzustellen und die Höhenregulierung der anderen Aggregate mit Hilfe der zweiteiligen Befestigungslaschen 30 durchzuführen.

**Patentansprüche**

1. Besäumvorrichtung für eine Tischkreissäge mit einer in Arbeitsrichtung verschiebbaren, tischseitig geführten Werkstückaufnahme, gekennzeichnet durch einen als Anbauteil an einer Tischlängsseite lösbar festlegbaren Anbauträger (5), auf dem eine hierüber auskragende, schmale Laufschiene (8) gelagert ist, die zwei einander gegenüberliegende Werkstückspanner (6, 7) trägt, wobei die Werkstückspanner mit an tischseitig auskragenden, auf Tischhöhe angeordneten Armen (11) versehen sind, an denen Werkstückaufnehmer (12) befestigt sind und wobei der hintere Werkstückspanner (7) in Längsrichtung auf der Laufschiene (8), verschiebbar angeordnet ist.

2. Besäumvorrichtung nach Anspruch 1, gekennzeichnet durch eine am Anbauträger (5) befestigte, vom Bereich der hinteren Tischstirnseite entgegen der Bearbeitungsrichtung nach hinten sich erstreckende, auf Tischhöhe angeordnete, stationäre Werkstückauflagebank (19).

3. Besäumvorrichtung nach Anspruch 2, dadurch gekennzeichnet, dass die Werkstückauflagebank (19) mit einer auf einem seitlich auskragenden Arm (22) aufgenommenen Stützrolle (23) versehen ist, die die Laufschiene (8) untergreift.

4. Besäumvorrichtung nach einem der vorhergehenden Ansprüche, dadurch gekennzeichnet, dass die Laufschiene (8) in ihrer Ausgangsstellung gegenüber dem sie aufnehmenden stationären Anbauträger (5) mittels einer selbsttätigen Verriegelungseinrichtung (24) arretierbar ist, die mittels eines vorzugsweise als Leine (29) ausgebildeten Zugorgans auslösbar ist.

5. Besäumvorrichtung nach Anspruch 4, dadurch gekennzeichnet, dass die Verriegelungseinrichtung (24) einen auf dem Anbauträger (5) gelagerten, die Laufschiene (8) untergreifenden, unter der Wirkung einer Feder (26) in eine zugeordnete Bohrung (27) der Laufschiene (8) einrastenden Sperrbolzen (25) aufweist, an dem ein Arm einer dreiarmigen Wippe (28) angreift, die mit einem weiteren Arm am Anbauträger (5) schwenkbar aufgenommen ist und deren dritter Arm mit dem Zugorgan (29) verbunden ist.

6. Besäumvorrichtung nach einem der vorhergehenden Ansprüche, dadurch gekennzeichnet, dass der Anbauträger (5) einen nach oben offenen, U-förmigen Querschnitt aufweist und mit mindestens zwei im Bereich der Innenseiten seiner seitlichen Schenkel angeordneten Paaren von Laufrollen (9) versehen ist, und dass die in den Anbauträger (5) eingreifende Laufschiene (8) mit seitlichen, den Laufrollen (9) zugeordneten, im Bereich ihrer nach oben weisenden Seite hinterschnittenen Führungskanälen (10) versehen ist, in die jeweils mindestens zwei hintereinander angeordnete Laufrollen (9) eingreifen, welche die Oberkante des Anbauträgers (5) zumindest um das Hinterschneidungsmass überragen.

7. Besäumvorrichtung nach einem der vorhergehenden Ansprüche, dadurch gekennzeichnet, dass die Laufschiene (8) im Bereich ihrer nach oben weisenden Seite eine in Längsrichtung verlaufende, hinterschnittene Nut (13) aufweist, in die den Werkstückspannern (6 bzw. 7) jeweils zugeordnete Leisten (14) formschlüssig eingreifen, wobei die dem hinteren Werkstückspanner (7) zugeordnete Leiste (14) als Führungsleiste ausgebildet und mit dem zugeordneten, spannerseitigen Arm (11) fest verbunden und die dem vorderen Werkstückspanner (6) zugeordnete Leiste (14) als Klemmleiste ausgebildet ist, die mittels einer Klemmschraube mit dem die Nut (13) überbrückenden, spannerseitigen Arm (11) verspannbar ist, der vorzugsweise mit einer schräg ausgestellten, ebenfalls mit der Leiste (14) verspannbaren Versteifungsstrebe (16) versehen ist.

8. Besäumvorrichtung nach einem der vorhergehenden Ansprüche, dadurch gekennzeichnet, dass die vorzugsweise als Skalenträger ausgebildeten, spannerseitigen Arme (11) mit einer sägenblattseitig überstehenden, aus Holz oder Kunststoff bestehenden Verlängerung (17) versehen sind, deren vordere Stirnseite eine Schnittmarkierung bildet.

9. Besäumvorrichtung nach einem der vorhergehenden Ansprüche, dadurch gekennzeichnet, dass die Werkstückaufnehmer (12) als einander gegenüberliegende Stahlspitzen ausgebildet sind.

10. Besäumvorrichtung nach einem der vorhergehenden Ansprüche, dadurch gekennzeichnet, dass der Anbauträger (5) mit zwei im Bereich seiner Enden angeordneten, tischseitig auskragenden, an tischseitig vorzugsweise höhenverstellbar festlegbaren Anbauplatten (31) zur Anlage bringbaren, vorzugsweise zweiteilig ausgebildeten Befestigungslaschen (30) versehen ist, die im Bereich ihrer nach unten weisenden Kanten jeweils mindestens eine nach unten offene Rastkerbe (32) und im Bereich ihrer vom Anbauträger abgewandten Enden jeweils mindestens einen tischseitig offenen Einfahrschlitz (33) aufweisen, und dass die im Bereich der vorderen und hinteren Tischstirnseiten festlegbaren Anbauplatten (31) mit den Rastkerben (32) bzw. den Einfahrschlitzen (33) zugeordneten, querschnittmässig hieran angepassten Bolzen (34) versehen sind, die als Gewindebolzen ausgebildet sind, auf die jeweils vorzugsweise von einer mit Löchern für sämtliche Bolzen (34) der jeweils zugeordneten Anbauplatte (31) versehenen Unterlegleiste (35) untergriffene Spannmuttern aufschraubbar sind.

## Claims

1. An edging device for a table circular saw with a work support able to be diplaced in the direction of working and guided on the table of the saw, characterized by the provision of a fitting carrier (5) as a fixture and able to be fixed detachably to one longitudinal side of the table, and on the fitting carrier there is a support rail (8) projecting out beyond it, which rail carries two oppositely placed work clamps (6 and 7), which are provided with work supports (12) on arms (11) extending on the table side and arranged at the level of the table, and the rear clamp (7) is arranged on the rails so that it may be displaced in the longitudinal direction.

2. The edging device as claimed in claim 1 characterized by a stationary work support stage (19) which is secured to the fitting carrier (5), extends from the part adjacent to the rear table end face in a direction opposite to that of sawing and is arranged at the level of the table.

3. The edging device as claimed in claim 2 characterized in that the work support stage (19) is provided with a support roller (23) placed on a laterally extendind arm (22) and which fits under the rail (8).

4. The edging device as claimed in any one preceding claim characterized in that the rail (8) may be locked in its initial position in relation to the stationary fitting carrier (5) receiving it by means of an automatic locking device (24), which locking device is able to be actuated by means of pulling member preferably embodied in the form of a cord (29).

5. The edging device as claimed in claim 4 characterized in that the locking device (24) has a locking pin (25) which is pivoted on the fitting carrier (5), fits under the rail (8) and is acted upon by a spring (26) so as to snap into an associated hole (27) in the rail (8), and an arm of a three-armed rocking lever (28) acts on the pin (25), such rocking lever having another arm by way of which it is pivotally mounted on the fitting carrier (5) while its third arm is connected whith the pulling member (29).

6. The edging device as claimed in any one of the preceding claims characterized in that the fitting carrier (5) has an upwardly open U-like cross section and is provided with at least two pairs of rollers (9) arranged adjacent to the inner faces of its limbs and in that the rail (8) fitting into the fitting carrier (5) is provided with lateral guide channels (10) associated with the roller (9) and undercut adjacent to their upper face and at least two rollers (9) placed one behind the other fit respectively into these channels (10), such rollers extending past the upper edge of the fitting carrier (5) by an amount at least equal to the amount of undercut.

7. The edging device as claimed in any one of the preceding claims characterized in that the rail (8) has a groove (13) at its upwardly turned surface, such groove extending in the longitudinal direction and having ribs (14) of the work clamps (6 and 7) interlocking with them, the rib (14) associated with the rear work clamp (7) being designed in the form of a guide rail associated with the rear work clamp (7) and being fixedly connected to the associated arm (11) on the clamp side, the rib (14) associated with the front work clamp (6) being in the form of a gripping rail, which is able to be clamped by means of an arm (11) on the clamp side and spanning the groove (13), such arm preferably being provided with an obliquely set stiffening strut (16) able to be clamped with the rail (14) as well.

8. The edging device as claimed in any one of the preceding claims characterized in that the arms (11) on the clamp side and preferably in the form of a scale carrier are provided with an extension (17) projecting on the saw blade side and consisting of work or plastic and of which the front end surface forms a cut mark.

9. The edging device as claimed in any one of the preceding claims characterized in that the work supports (12) are in the form of oppositely placed steel points.

10. The edging device as claimed in any one of the preceding claims characterized in that the fitting carrier (5) is provided at its ends with two attachment lugs (30) which are preferably made in two parts, project outwards towards the table and are mounted on the table side so as to project on attachment plates (31) able to be locked at an adjustable height, and such lugs at their downwardly pointed edges each have at least one downwardly opening detent notch (32) and at their ends remote from the fitting carrier each have at least one female slot (33) open towards the table and in that the attachment plates (31) able to be secured adjacent to the front and rear table ends are provided with pins (34) associated with the detent notches (32) and the female slots (33), to which they are adapted in cross section, such pins being designed in the form of threaded bolts, onto which clamping nuts may be screwed which preferably have a backing plate (35) with holes for all the pins (34) of the respectively associated fitting plate (31).

## Revendications

1. Dispositif de rognage pour une scie circulaire de table de menuisier comportant un logement pour pièces à usiner guidé côté table et pouvant se déplacer dans le sens de travail, caractérisé en ce que, comme pièce de montage, il comporte un support de montage (5) pouvant être fixé de manière amovible sur un côté longitudinal de la table et sur lequel est monté un rail de roulement étroit (8) ressortant en saillie de ce support, tout en supportant deux éléments de serrage de pièces à usiner (6, 7) se faisant mutuellement face et comportant des bras (11) situés à hauteur de la table de laquelle ils ressortent en saillie, bras sur lesquels sont fixés des réceptacles (12) pour les pièces à usiner, tandis que l'élément arrière de serrage (7) des pièces à usiner est disposé de façon à pouvoir se déplacer dans le sens longitudinal sur le rail de roulement (8).

2. Dispositif de rognage selon la revendication 1, caractérisé en ce qu'il comporte un banc support (19) immobile pour les pièces à usiner, ce banc étant fixé au support de montage (5) et disposé au niveau de la table en s'étendant de la face frontale arrière de celle-ci vers l'arrière à l'encontre du sens d'usinage.

3. Dispositif de rognage selon la revendication 2, caractérisé en ce que le banc support (19) pour les pièces de travail est pourvu d'un galet support (23) venant prendre appui sur un bras (22) ressortant latéralement en saillie et venant s'engager par le bas sur le rail de roulement (8).

4. Dispositif de rognage selon une des revendications précédentes, caractérisé en ce que, dans sa position de départ, le rail de roulement (8) peut être bloqué vis-à-vis du support de montage fixe (5) dans lequel il vient se loger, au moyen d'un dispositif de verrouillage automatique (24) qui peut être déclenché au moyen d'un organe de traction réalisé, de préférence, sous forme d'un cordeau (29).

5. Dispositif de rognage selon la revendication 4, caractérisé en ce que le dispositif de verrouillage (24) comporte un boulon de blocage (25) monté sur le support de montage (5), venant s'engager par dessous sur le rail de roulement (8) et venant s'encliqueter, sous l'action d'un ressort (26), dans un trou correspondant (27) pratiqué dans le rail de roulement (8), boulon sur lequel vient s'engager un bras d'une bascule (28) en comportant trois et venant se loger de manière pivotante par un autre bras sur le support de montage (5), tandis que son troisième bras est relié à l'organe de traction (29).

6. Dispositif de rognage selon une des revendications précédentes, caractérisé en ce que le support de montage (5) a une section transversale en U ouverte vers le haut et comporte au moins deux paires de galets de roulement (9) disposés dans la zone des faces intérieures de ses ailes latérales, tandis que le rail de roulement (8) venant s'engager dans le support de montage (5) est pourvu de canaux latéraux de guidage (10) attribués aux galets de roulement (9) et comportant une dépouille dans la zone de leur face dirigée vers le haut, canaux dans chacun desquels viennent s'engager au moins deux galets de roulement (9) disposés l'un derrière l'autre et ressortant en saillie du bord supérieur du support de montage (5) sur une distance correspondant au moins à la dimension de la dépouille.

7. Dispositif de rognage selon une des revendications précédentes, caractérisé en ce que, dans la zone de sa face dirigée vers le haut, le rail de roulement (8) comporte une rainure dépouillée (13) s'étendant dans le sens longitudinal et dans laquelle sont crabotées des languettes (14) attribuées à chacun des éléments de serrage de pièces à usiner (6 ou 7), la languette (14) attribuée à l'élément de serrage arrière (7) étant réalisée sous forme d'une languette de guidage et étant assemblée solidairement au bras correspondant (11) situé du côté de l'élément de serrage, tandis que la languette (14) attribuée à l'élément avant (6) de serrage de pièces à usiner est réalisée sous forme d'une languette de serrage qui peut être serrée au moyen d'une vis de serrage avec le bras (11) situé du côté de l'élément de serrage et chevauchant la rainure (13), ce bras étant pourvu, de préférence, d'une jambe de force (16) disposée en oblique et pouvant également être serrée avec la languette (14).

8. Dispositif de rognage selon une des revendications précédentes, caractérisé en ce que les bras (11) situés du côté des éléments de serrage et réalisés, de préférence, sous forme d'un support gradué, sont pourvus d'un prolongement (17) en bois ou en matière synthétique ressortant en saillie côté lame de scie, la face frontale avant de ce prolongement formant un repère de coupe.

9. Dispositif de rognage selon une des revendications précédentes, caractérisé en ce que des réceptacles (12) pour les pièces à usiner sont réalisés sous forme de pointes en acier se faisant mutuellement face.

10. Dispositif de rognage selon une des revendications précédentes, caractérisé en ce que le support de montage (5) comporte deux éclisses de fixation (30) réalisées, de préférence, en deux parties, disposées dans la zone des extrémités de ce support, ressortant en saillie côté table, pouvant être amenée à buter contre des plaques de montage (31) pouvant être fixées côté table, de préférence, en ayant la possibilité d'être réglées en hauteur, ces éclisses comportant chacune, dans la zone de leurs bords dirigés vers le bas, au moins une encoche d'encliquetage (32) ouverte vers le bas et, dans la zone de leurs extrémités éloignées du support de montage, chaque fois au moins une fente d'entrée (33) ouverte côté table, tandis que les plaques de montage (31) pouvant être fixées dans la zone des faces frontales avant et arrière de la table sont pourvues de boulons (34) attribués, avec une section transversale y adaptée, aux encoches d'encliquetage (32) ou aux fentes d'entrée (33), ces boulons étant réalisés sous forme de boulons filetés sur chacun desquels on peut visser, de préférence, des écrous de serrage en dessous desquels vient s'engager une languette de calage (35) pourvue de trous pour tous les boulons (34) de chacune des plaques de montage (31) qui leur sont attribuées.

FIG 1

0 174 640

FIG 2

0 174 640

FIG 3

FIG 4